# EUROPEAN PATENT SPECIFICATION

(11) **EP 1 995 365 B1**
(45) Date of publication and mention of the grant of the patent: **18.08.2010**
(21) Application number: 08151899.5
(22) Date of filing: 25.02.2008
(51) Int. Cl.: D06F 37/20, D06F 37/30

(54) **Tub of a washing machine with multiple fitting positions for motors**
Trommel einer Waschmaschine mit mehreren Anbringpositionen für Motoren
Cuve d'une machine à laver avec plusieurs places pour moteurs

(30) Priority: 22.05.2007 KR 20070049663
(43) Date of publication of application: 26.11.2008
(73) Proprietor: Samsung Electronics Co., Ltd., Yeongtong-gu Suwon-si, Gyeonggi-do (KR)
(72) Inventor: Byun, Hui Seob, Sengdong-gu Seoul (KR); Gweon, Tae Sung, Gyeonggi-do (KR)
(74) Representative: Grünecker, Kinkeldey, Stockmair & Schwanhäusser Anwaltssozietät

(56) References cited:
- WO-A-02/48444
- WO-A-2004/069019
- DE-A1- 19 917 582
- US-A- 5 551 261

## Description

### BACKGROUND

### 1. Field

The present invention relates to a washing machine, and more particularly to a washing machine having an improved tub structure such that a tub can be commonly used for motors mounted on different positions.

### 2. Description of the Related Art

A washing machine is a machine which washes clothes using power. Generally, the washing machine includes a tub to store washing water therein, a rotary drum rotatably installed in the tub, and a motor to drive the rotary drum to rotate. The washing machines may be classified into an indirect driving-type washing machine which transfers a driving force of a motor to the rotary drum through a driving force transfer device, such as a belt and a pulley, and a direct driving-type washing machine in which a rotor of a motor is directly connected to a shaft of the rotary drum.

In the indirect driving-type washing machine, the motor is generally mounted at a lower side of the tub and the shafts of the motor and the rotary drum are connected to each other through a pulley and a belt. The indirect driving-type washing machine has advantages in the price and in the safety in a high-speed rotation. However, the indirect driving type washing machine has disadvantages such that an energy loss is generated in a driving force transfer process using a pulley and a belt, and noises and vibration are relatively frequently generated.

On the other hand, in the direct driving-type washing machine, a stator of the motor is fixed on a rear surface of the tub, and a rotor of the motor is coupled to a shaft of the rotary drum which is extended outward from the rear surface of the tub to directly rotate the rotary drum. The direct driving-type washing machine has advantages such that noises and vibration are rarely generated. However, the driving-type washing machine has disadvantages such that the price is relatively high and there is a limit when the rotary drum is rotated at a high speed.

Recently, along with the trend of a high-quality washing machine, the direct driving-type washing machine has been vigorously studied as the reduction of noises and vibration is regarded as more important than the price. However, since the indirect driving-type washing machine which has been used for a long period of time and is verified has advantages, it is necessary to properly select one of both washing machines according to the market flow.

As described above, a structure of mounting the motor on the tub is different according to types of washing machines. Conventionally, different tubs are manufactured and used for the respective types. However, when different tubs are manufactured for the respective types, it is impossible to quickly cope with the market flow. Further, the productivity is reduced and the manufacturing cost of parts increases.

US-A-5,551,261 discloses an automatic washing machine with an outer tub, a perforated moveable inner tub, and for example a generator for lifting the inner tub in accordance with the water level in outer tub. A motor is mounted on the outer bottom centre of the outer tub. Furthermore, a rotator is mounted on a top end of a motor shaft and a clutching unit for selectively coupling the inner tub to either the outer tub or the rotator is also provided.

### SUMMARY

It is an object of the present invention to provide a tub of a washing machine and a corresponding washing machine comprising such a tub which can be commonly used with motors mounted on different positions.

This object is solved by the features of claim 1.

Advantageous embodiments are disclosed in the sub claims.

Additional aspects and/or advantages will be set forth in part in the description which follows and, in part, will be apparent from the description, or may be learned by practice of the invention.

The first motor mounting portion and the second motor mounting portion may be integrally formed as one body with the tub when the tub is manufactured.

The indirect connection-type motor may include a motor housing having at least one coupling hole to be coupled with the second motor mounting portion, and the second motor mounting portion may include at least one coupling protrusion corresponding to the at least one coupling hole and protruded backward and inserted into the corresponding coupling hole.

### BRIEF DESCRIPTION OF THE DRAWINGS

These and/or other aspects and advantages of the embodiment will become apparent and more readily appreciated from the following description of the embodiment, taken in conjunction with the accompanying drawings, of which:
FIG. 1 is a cross-sectional view showing a configuration of a washing machine according to the present embodiment;
FIG. 2 illustrates an enlarged view of a portion of the washing machine shown in FIG. 1;
FIG. 3 depicts a perspective view showing a state where a motor is mounted on a first motor mounting portion in the laundry machine according to the present embodiment;
FIG. 4 is a cross-sectional view showing a configuration when a motor is mounted on a second motor mounting portion of the tub in the present embodiment;
FIG. 5 is an exploded perspective view showing a state where a motor is mounted on the second motor mounting portion of the tub; and
FIG. 6 is a combined perspective view showing a state after a motor is mounted on the second motor mounting portion shown in FIG. 5.

### DETAILED DESCRIPTION OF THE EMBODIMENTS

Reference will now be made in detail to an embodiment, examples of which are illustrated in the accompanying drawings, wherein like reference numerals refer to like elements throughout.
The embodiment is described below to explain the present invention by referring to the figures.

Hereinafter, an embodiment will be described in detail with reference to the accompanying drawings.

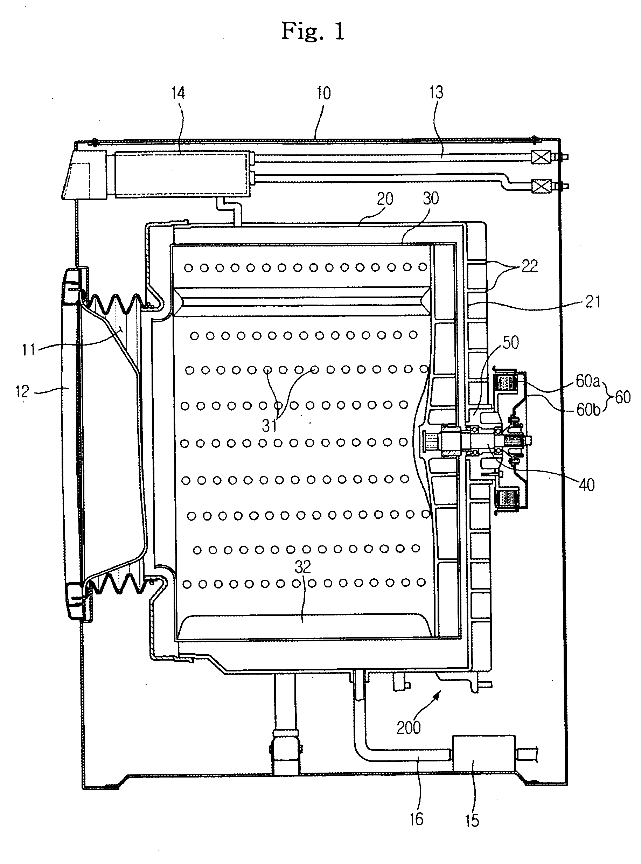

As shown in FIG. 1, the washing machine according to the present embodiment includes a main body 10 forming an external appearance, a tub 20 installed in the main body 10 to contain washing water, and a rotary drum 30 rotatably installed in the tub 20. A loading opening 11 is formed on a front surface portion of the main body 10 such that laundry is loaded into the rotary drum 30. A door 12 capable of being opened and closed is installed at the loading opening 11.

A water supply line 13 and a detergent supply device 14 are installed above the tub 20 to supply washing water and a detergent to the tub 20. A water drain pump 15 and a water drain line 16 are installed under the tub 20 to discharge water in the tub 20 to an outside of the main body 10.

As shown in FIGS. 1, 2 and 4, one end of a rotation shaft 40 is connected to a rear wall of the rotary drum 30. The other end of the rotation shaft 40 is extended outward from a rear wall 21 of the tub 20. The rotary drum 30 is in a rotatable state in the tub 20 as the rotation shaft 40 is rotatably supported on the rear wall 21 of the tub 20. Meanwhile, a plurality of through holes 31 to flow washing water is formed on a circumferential portion of the rotary drum 30. A plurality of lifters 32 is installed on an inner peripheral surface of the rotary drum 30 such that the laundry can be lifted up and down upon the rotation of the rotary drum 30.

The tub 20 may be made of a resin material, for example, through injection molding. A bearing housing 50 is installed on the rear wall 21 of the tub 20 to rotatably support the rotation shaft 40. The bearing housing 50 may be formed of an aluminum alloy, for example. The bearing housing 50 is buried in a center of the rear wall 21 of the tub 20 to be fixed to the rear wall 21 in the injection molding of the tub 20. A plurality of bearings 51 is installed between the bearing housing 50 and the rotation shaft 40. The bearings 51 stably support the rotation shaft 40 coupled to the rotary drum 30 in a rotatable state. Reinforcing ribs 22 having a grid pattern are formed on the rear wall 21 of the tub 20 at specified intervals in a radial direction and in a circumferential direction. The reinforcing ribs 22 prevent bending in the injection molding of the tub 20. Further, the reinforcing ribs 22 prevent the rear wall 21 of the tub 20 from being twisted due to a load transferred to the tub 20 in the washing or water-extracting operation.

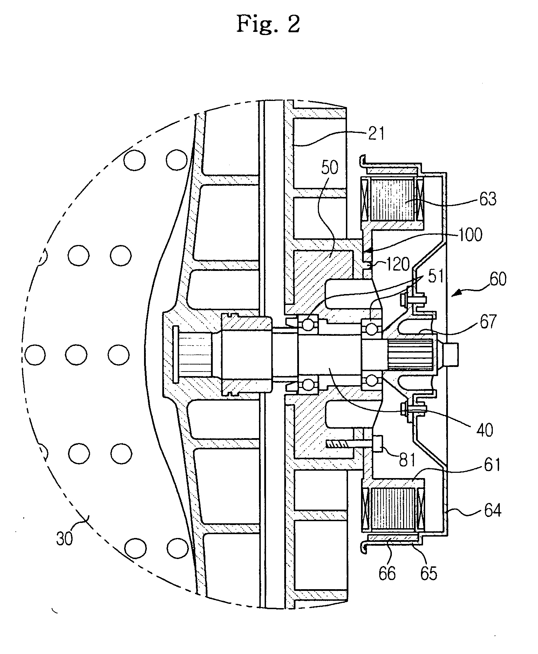

As shown in FIGS. 2 to 5, in the present embodiment, the tub 20 includes a first motor mounting portion 100 and a second motor mounting portion 200 to selectively mount different types of motors according to demands. The first motor mounting portion 100 is provided to mount a direct connection type motor 60 thereon. The second motor mounting portion 200 is provided to mount an indirect connection-type motor 70 thereon.

The direct connection-type motor 60 directly drives the rotation shaft 40 by connecting a rotor of the motor directly to the rotation shaft 40. The indirect connection-type motor 70 directly drives the rotation shaft 40 of the rotary drum 30 by connecting the motor to the rotation shaft 40 through a power transfer member such as a pulley or a belt. The direct connection-type motor 60 may employ a blushless DC motor (BLDC motor), for example. The indirect connection type motor 70 may employ a universal motor or a three phase motor, for example.

The first motor mounting portion 100 and the second motor mounting portion 200 may be formed as one body in the injection molding of the tub 20. When the tub 20 is configured to mount different types of motors thereon, the tub 20 can be commonly used for a direct driving-type washing machine and an indirect driving-type washing machine, thereby reducing the cost of parts.

Since the tub 20 is configured to mount different types of motors thereon to drive the rotation shaft 40 in the present embodiment, a shape of the tub 20 and shapes and positions of the first motor mounting portion 100 and the second motor mounting portion 200 should be designed considering the following points.

First, for example, only the first motor mounting portion 100 may be protruded backward from the rear wall 21 of the tub 20 and the other portion is designed to be flat as much as possible. According to circumstances, the tub 20 is designed to be protruded as the tub 20 goes toward a center of the tub 20 in order to enlarge a capacity of the tub 20. In this case, as the rear wall 21 of the tub 20 is protruded, a motor rotation shaft 73 of the indirect connection-type motor 70 installed on an outer peripheral surface of the tub 20 needs to have a long length. Accordingly, the motor rotation shaft 73 of the indirect connection-type motor 70 may shake.

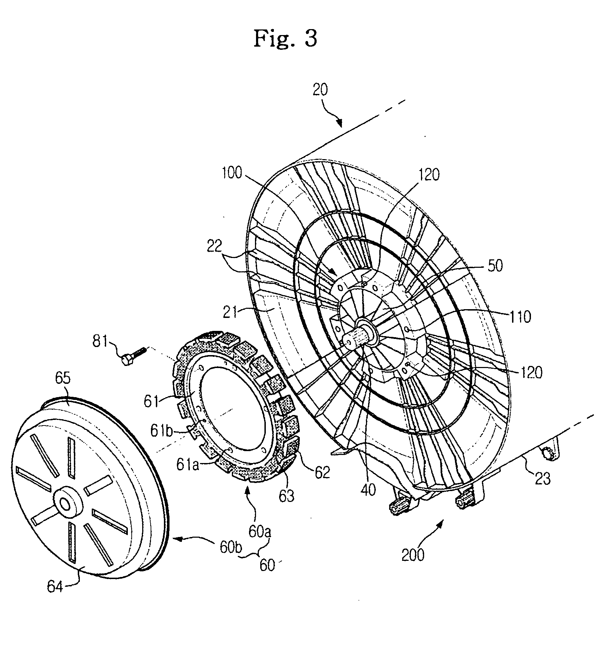

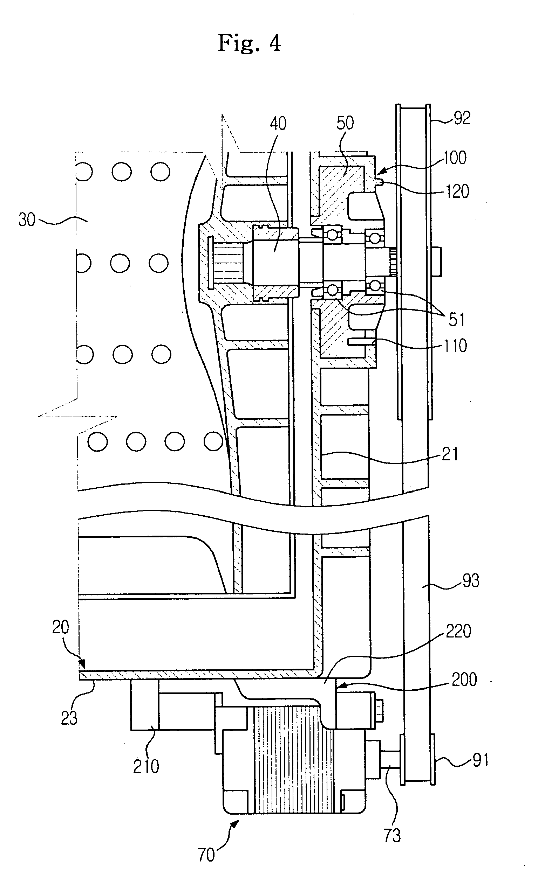

Further, it is preferable to design a shape and position of the second motor mounting portion 200 according to the design of the first motor mounting portion 100. In the present embodiment, a rotor 60b (see FIG. 3) and a drum pulley 92 (see FIG. 4) are selectively mounted on the rotation shaft 40 which is protruded backward from the first motor mounting portion 100. When the drum pulley 92 is mounted on the rotation shaft 40, a positional relation between the drum pulley 92 and a motor pulley 91 installed on the indirect connection-type motor 70 should be considered. In this case, the first motor mounting portion 100 may be designed with respect to the second motor mounting portion 200 to determine the positions of the drum pulley 92 and the motor pulley 91. However, it is much easier to adjust the shape and position of the second motor mounting portion 200 with respect to the first motor mounting portion 100 relative to the shapes of the tub 20 and the bearing housing 50.

First, an example of the present embodiment in which the direct connection-type motor 60 is mounted on the first motor mounting portion 100 will be described in detail with reference to FIGS. 2 and 3. The first motor mounting portion 100 is protrudingly formed at a central portion where the bearing housing 50 is installed on the rear wall 21 of the tub 20. The direct connection-type motor 60 mounted on the first motor mounting portion 100 includes a stator 60a which is fixed to the first motor mounting portion 100 and a rotor 60b which is rotatably installed at an outer portion of the stator 60a and has a central portion coupled to the rotation shaft 40.

The stator 60a includes a ring-shaped stator frame 61 which may be made of an insulating material, a core 62 deposited on an outer periphery of the stator frame 61, and a coil 63 wound on the core 62. The stator 60a is fixed to the first motor mounting portion 100 through a plurality of fixing screws 81. For this, clamping holes 61a and 110 to clamp the fixing screws 81 are respectively formed on an inner peripheral portion of the stator frame 61 and the first motor mounting portion 100.

The rotor 60b includes a rotation member which includes a circular plate portion 64 having a center coupled to the rotation shaft 40 and a rim portion 65 disposed on an outer periphery of the circular plate portion 64 to cover an outer portion of the stator 60a. The rotor 60b includes a plurality of magnets 66 attached to an inner surface of the rim portion 65 of the rotation member at specified intervals. The rotor 60b further includes a connecting member 67 coupled to a center of the circular plate portion 64. The connecting member 67 is serration-coupled to the rotation shaft 40 and extended backward from the tub 20. Accordingly, when the rotor 60b rotates by an electromagnetic force generated by applying power to the coil 63, the rotation shaft 40 rotates together with the rotor 60b.

As shown in FIG. 3, a plurality of positioning projections 120 is disposed on the first motor mounting portion 100 and positioning holes 61 b are disposed on the stator frame 61 such that the stator 60a of the motor 60 can be fixed on the first motor mounting portion 100 at an exact position. The positioning projections 120 are arranged along a circumferential direction of the first motor mounting portion 100. The positioning projections 120 are protrudingly formed backward from the tub 20. The positioning holes 61 b are formed on an inner peripheral portion of the stator frame 61 to correspond to the positioning projections 120. When the stator 60a is fixed on the first motor mounting portion 100, the stator 60a can be fixed at an exact position by clamping the fixing screws 81 after the positioning holes 61 b are coupled to the positioning projections 120.

Next, an example of the present embodiment in which the indirect connection-type motor 70 is mounted on the second motor mounting portion 200 will be described in detail with reference to FIGS. 4 to 6. The second motor mounting portion 200 is disposed on an outer peripheral surface 23 of the tub 20 at a lower side of the tub 20.

The indirect connection-type motor 70 mounted on the second motor mounting portion 200 includes a motor housing 71 forming an external appearance, a stator 72 formed by winding a field coil, and a motor rotation shaft 73 having opposite ends rotatably supported on the motor housing 71. Although not shown in the drawings, a rotor having a wound armature coil is disposed in the stator 72. A commutator which commutates the current flowing in the rotor in one direction and a brush which is in contact with the commutator are disposed on the rear of the rotor (both not shown). Since the configuration of the motor is the same as that of a universal motor which is well known, the detailed description thereof is omitted.

As shown in FIG. 4, the motor pulley 91 is installed at an end portion of the motor rotation shaft 73. The drum pulley 92 is installed at the rotation shaft 40 connected to the rotary drum 30. The motor pulley 91 and the drum pulley 92 are connected to each other via a belt 93. The motor pulley 91, the drum pulley 92 and the belt 93 serve as a power transfer device which transfers a power of the motor 70 to the rotation shaft 40.

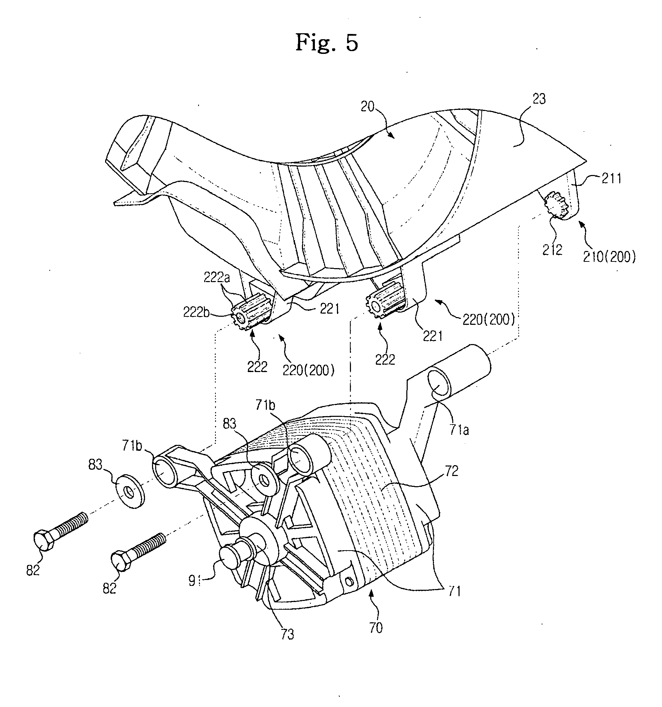

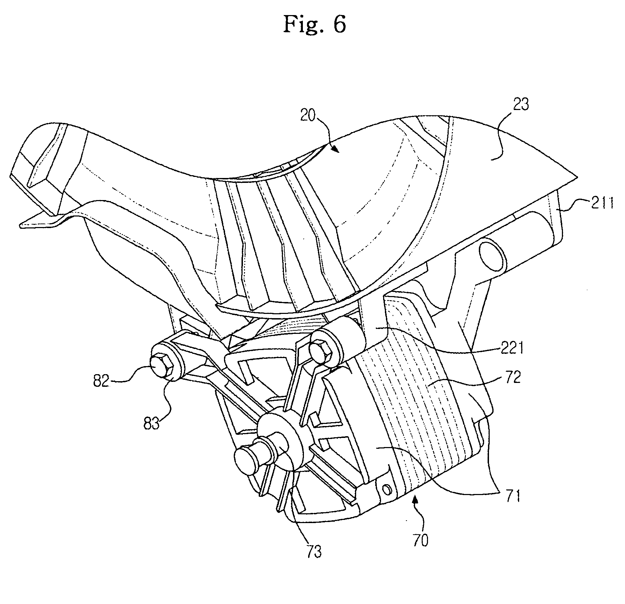

As shown in FIGS. 5 and 6, the second motor mounting portion 200 includes a support portion 210 which supports a front portion of the motor housing 71 and a coupling portion 220 which is coupled with a rear portion of the motor housing 71. The support portion 210 includes a first support body 211 which extends downward from the outer peripheral surface 23 of the tub 20 and a support protrusion 212 which protrudes backward from one surface of the first support body 211. Further, the coupling portion 220 includes second support bodies 221 which extend downward from the outer peripheral surface 23 of the tub 20 and coupling protrusions 222 which protrude backward from the second support body 221.

The support protrusion 212 is inserted into a first coupling hole 71a disposed on the motor housing 71 to support the front portion of the motor housing 71. The coupling protrusions 222 are inserted into second coupling holes 71 b disposed on the motor housing 71 to support the rear portion of the motor housing 71. The coupling protrusions 222 serve to firmly fix the motor housing 71 to the tub 20. For this, a plurality of coupling ribs 222a is formed on an outer surface of each of the coupling protrusions 222 in a circumferential direction. The coupling ribs 222a allow the coupling protrusion 222 to be pressed onto an inner peripheral surface of the second coupling hole 71b when the coupling protrusion 222 is inserted into the second coupling hole 71b.

Although the motor housing 71 is fixed on the tub 20 by pressing the coupling protrusions 222 to the second coupling holes 71 b, the motor housing 71 can move in forward and backward directions due to vibration or an external impact. Accordingly, a fixing groove 222b is formed in a central portion of each of the coupling protrusions 222 such that a clamping member such as a bolt 82 may be inserted into the fixing groove 222b. Then, a fixing member 83 is disposed between the fixing groove 222b and the bolt 82 to block a rear of the coupling protrusion 222 and the second coupling hole 71b which are coupled with each other, thereby preventing the forward and backward movement of the motor housing 71.

Although the second motor mounting portion 200 includes one support portion and two coupling portions in the example shown in FIGS. 5 and 6, the number of the support portions and the coupling portions can be changed as needed.

As described above, the tub of the present embodiment can be commonly used for a direct driving-type washing machine and an indirect driving-type washing machine which have different motor-mounting positions. Accordingly, when a driving manner is changed according to demand, since a tub should not be additionally designed or manufactured, it is possible to quickly cope with the market flow and reduce the cost of parts.

Although an embodiment has been shown and described, it would be appreciated by those skilled in the art that changes may be made in this embodiment without departing from the principles of the invention, the scope of which is defined in the claims.

## Claims

1. A tub (20) of a washing machine, comprising a rotary drum (30), being **characterized in that** the tub (20) comprises:
a first motor mounting portion (100) to mount a motor (60) directly connected to the rotary drum (30) for a direct-drive washing machine configuration; and
a second motor mounting portion (200) to mount a motor (70) indirectly connected to the rotary drum (30) for an indirect-drive washing machine configuration.

2. The tub according to claim 1, wherein the first motor mounting portion (100) and the second motor mounting portion (200) are integrally formed as one body with the tub (20).

3. A washing machine, comprising:
a tub (20) according to one of the previous claims;
a rotary drum (30) rotatably installed in the tub (20) and
one of the direct connection-type motor (60) and the indirect connection-type motor (70) mounted on one of the first motor mounting portion (100) and the second motor mounting portion (200) to drive the rotary drum (30).

4. The washing machine according to claim 3, wherein the indirect connection type motor (70) includes a motor housing (71) having at least one coupling hole (71 a, b) to be coupled with the second motor mounting portion (200) and the second motor mounting portion includes at least one coupling protrusion (212, 222) corresponding to the at least one coupling hole (71 a, b) and protruded backwards and inserted into the corresponding coupling hole.

5. The washing machine according to claim 4, further comprising a fixing member (83) blocking a rear of the at least one coupling hole (71a, b) and the corresponding coupling protrusion (212, 222) coupled with each other to prevent forward and backward movement of the indirect connection-type motor.

6. The washing machine according to claim 4, wherein a plurality of coupling ribs (222a) is formed on an outer surface of each of the at least one coupling protrusion (212, 222) in a circumferential direction, such that each coupling protrusion is pressed and inserted into the corresponding coupling hole (71a, b).

7. The washing machine, according to claim 3, wherein
the first mounting portion (100) is provided on a rear wall (21) of the tub (20) and the second motor mounting portion (200) is provided on an outer peripheral surface of the tub (20).

8. The washing machine according to claim 7, wherein the motor (60) is a direct connection-type motor when the motor (60) is attached to the rear wall (21) of the tub (20), and the motor (70) is an indirect connection-type motor when the motor (70) is attached to the bottom of the tub (20).

9. The washing machine according to claim 8, further comprising, a rotation shaft (40), wherein the direct connection-type motor is directly connected to the rotary drum by the rotation shaft and the indirect connection-type motor is indirectly connected to the rotary drum through a power transfer device (73,91,92,93) indirectly transferring a driving force to the rotary drum (30).

## Patentansprüche

1. Bottich (20) einer Waschmaschine, die eine drehbare Trommel (30) aufweist,
**dadurch gekennzeichnet, dass** der Bottich (20) umfasst:
einen ersten Motor-Montageabschnitt (100), um einen Motor (60) für eine Waschmaschinenkonfiguration mit direktem Antrieb in direkter Verbindung an die drehbare Trommel (30) zu montieren; und
einen zweiten Motor-Montageabschnitt (200), um einen Motor (70) für eine Waschmaschinenkonfiguration mit indirektem Antrieb in indirekter Verbindung an die drehbare Trommel (30) zu montieren.

2. Bottich nach Anspruch 1, wobei der erste Motor-Montageabschnitt (100) und der zweite Motor-Montageabschnitt (200) integral einstückig mit dem Bottich (20) ausgebildet sind.

3. Waschmaschine, die umfasst:
einen Bottich (20) nach einem der vorhergehenden Ansprüche;
eine drehbare Trommel (30), die drehbar in dem Bottich (20) installiert ist, und
einen Motor vom Typ mit direkter Verbindung (60) oder einen Motor vom Typ mit indirekter Verbindung (70), der am ersten Motor-Montageabschnitt (100) oder dem zweiten Motor-Montageabschnitt (200) montiert ist, um die drehbare Trommel (30) anzutreiben.

4. Waschmaschine nach Anspruch 3, wobei der Motor vom Typ mit indirekter Verbindung (70) ein Motorgehäuse (71) umfasst, das mindestens eine Kopplungsöffnung (71a, b) zur Kopplung an den zweiten Motor-Montageabschnitt (200) aufweist, und der zweite Motor-Montageabschnitt mindestens einen Kopplungsvorsprung (212, 222) aufweist, der mit der mindestens einen Kopplungsöffnung (71a, b) korrespondiert und nach hinten vorsteht und in die korrespondierende Kopplungsöffnung eingesetzt wird.

5. Waschmaschine nach Anspruch 4, die ferner ein Fixierelement (83) aufweist, das eine Rückseite der miteinander verbundenen mindestens einen Kopplungsöffnung (71a, b) und dem korrespondierenden Kopplungsvorsprung (212, 222) blockiert, um eine Vorwärts- und Rückwärtsbewegung des Motors vom Typ mit indirekter Verbindung zu verhindern.

6. Waschmaschine nach Anspruch 4, wobei eine Vielzahl von Kopplungsrippen (222a) an einer Außenfläche von jedem der mindestens einen Kopplungsvorsprünge (212, 222) in Umfangsrichtung ausgebildet ist, so dass jeder Kopplungsvorsprung in die korrespondierende Kopplungsöffnung (71a, b) gepresst und eingesetzt wird.

7. Waschmaschine nach Anspruch 3, wobei
der erste Montageabschnitt (100) an einer Rückwand (21) des Bottichs (20) bereitgestellt ist und der zweite Motor-Montageabschnitt (200) an einer Außenumfangsfläche des Bottichs (20) bereitgestellt ist.

8. Waschmaschine nach Anspruch 7, wobei der Motor (60) ein Motor vom Typ mit direkter Verbindung ist, wenn der Motor (60) an der Rückwand (21) des Bottichs (20) befestigt ist, und der Motor (70) ein Motor vom Typ mit indirekter Verbindung ist, wenn der Motor (70) am Boden des Bottichs (20) befestigt ist.

9. Waschmaschine nach Anspruch 8, die weiterhin eine Rotationswelle (40) umfasst, wobei der Motor vom Typ mit direkter Verbindung über die Rotationswelle direkt mit der drehbaren Trommel verbunden ist und der Motor vom Typ mit indirekter Verbindung indirekt mit der drehbaren Trommel über eine Kraftübertragungsvorrichtung (73, 91, 92, 93) verbunden ist, die indirekt eine Antriebskraft auf die drehbare Trommel (30) überträgt.

## Revendications

1. Une cuve d'une machine à laver, comprenant un tambour rotatif (30) **caractérisé par le fait que** la cuve (20) comprend :
une première partie de montage de moteur (100) pour monter un moteur (60) directement connecté à la cuve rotative (30) pour une configuration de machine à laver à entraînement direct ; et
une deuxième partie de montage de moteur (200) pour monter un moteur (70) indirectement connecté au tambour rotatif (30) pour une configuration de machine à laver à entraînement indirect.

2. La cuve selon la revendication 1, où la première partie de montage de moteur (100) et la deuxième partie de montage de moteur (200) sont intégralement formées comme un et seul corps avec la cuve (20).

3. Une machine à laver comprenant :
une cuve (20) selon l'une des revendications précédentes ;
un tambour rotatif (30) installé de manière à pouvoir tourner dans la cuve (20) et
un moteurs à type de connexion directe (60) ou à type de connexion indirecte (70) monté sur la première partie de montage de moteur (100) ou la seconde partie de montage de moteur (200) pour entraîner le tambour rotatif (30).

4. La machine à laver selon la revendication 3, où le moteur à type de connexion indirect (70) inclut un habitacle de moteur (71) présentant au moins un trou de couplage (71a, b) devant être couplé avec la seconde partie de montage de moteur (200) et la seconde partie de montage de moteur inclut au moins une saillie de couplage (212, 222) correspondant à l'au moins un trou de couplage (71a, b) et faisant saillie en arrière et étant insérée dans le trou de couplage correspondant.

5. La machine à laver selon la revendication 4, comprenant en outre un membre de fixation (83) bloquant une arrière du, au moins un, trou de couplage (71a, b) et le trou de couplage correspondant (212, 222) couplé entre eux pour prévenir les mouvements avant et arrière du moteur à type de connexion indirect.

6. La machine à laver selon la revendication 4, où plusieurs nervures de renforcement de couplage (222a) sont formées sur une surface extérieure de chacune des, au moins une, saillies (212, 222) de couplage dans une direction circonférentielle, de manière à ce que chaque saillie de couplage soit pressée et insérée dans un trou de couplage correspondant (71a, b).

7. La machine à laver selon la revendication 3 où la première partie de montage (100) est fournie sur une paroi arrière (21) de la cuve (20) et la seconde partie de montage de moteur (200) est pourvu sur une surface périphérique extérieure de la cuve (20).

8. La machine à laver selon la revendication 7, où le moteur (60) est un moteur à type de connexion directe lorsque le moteur (60) est attaché à la paroi arrière (21) de la cuve (20), et le moteur (70) est un moteur à type de connexion indirect lorsque le moteur (70) est attaché au fond de la cuve (20).

9. La machine à laver selon la revendication 8, comprenant, en outre, un arbre de rotation (40), où le moteur à type de connexion directe est directement connecté au tambour rotatif par l'arbre de rotation et où le moteur à type de connexion indirect est indirectement connecté au tambour rotatif par un dispositif de transfert de puissance (73, 91, 92, 93) transférant indirectement une force d'entraînement vers le tambour rotatif (30).
